# EUROPEAN PATENT APPLICATION

(11) **EP 4 734 243 A1**
(43) Date of publication of application: **29.04.2026**
(21) Application number: 25206291.4
(22) Date of filing: 02.10.2025
(51) Int. Cl.: H01M 50/15, H01M 50/176, H01M 50/553, H01M 50/593

(54) **COVER PLATE ASSEMBLY AND BATTERY CELL OF SECONDARY BATTERY**

(30) Priority: 23.10.2024 CN 202422567541 U
(71) Applicant: AESC Japan Ltd., Yokohama-shi, Kanagawa 220-0012 (JP)
(72) Inventor: WANG, Zhen, Jiangyin City, Wuxi City, Jiangsu 214443 (CN)
(74) Representative: Becker, Eberhard

(57) **Abstract**

Provided are a cover plate assembly (100, 200) and a battery cell of a secondary battery. The cover plate assembly (100, 200) includes a cover plate (110) provided with a pole post installation hole (112A, 112B); a lower insulation plate (150) located on a first side (110S1) of the cover plate (110) and having a through hole (151A, 151B) corresponding to the pole post installation hole (112A, 112B); and a pole post (220A, 220B) passing through the through hole (151A, 151B) and the pole post installation hole (112A, 112B). In a second direction perpendicular to a first direction (Z), one of the pole post (220A, 220B) and the lower insulation plate (150) includes a protrusion portion (150P, 225P) while the other one includes a recess portion (150R, 225R) matched with the protrusion portion (150P, 225P). The pole post (220A, 220B) further includes a main body portion (225).

## Description

### BACKGROUND

### Technical Field

The disclosure relates to a technical field of a battery, and more particularly, to a cover plate assembly and a battery cell of a secondary battery.

### Description of Related Art

A secondary battery is widely used in electronic devices, such as mobile phones, notebook computers, battery electric vehicles, electric vehicles, electric aircrafts, electric ships, electric toy cars, electric toy ships, electric toy aircrafts, and electric tools. Currently common secondary batteries include nickel-cadmium batteries, nickel-metal hydride batteries, lithium-ion batteries, secondary alkaline zinc-manganese batteries, etc. The lithium-ion battery has become a mainstream power battery for new energy vehicles due to advantages thereof such as high specific energy, high specific power, long service life, and low cost.

The cover plate assembly of the secondary battery includes a lower insulation plate configured to electrically insulating an electrode assembly from a cover plate. If the lower insulation plate is twisted relative to the cover plate, and a position thereof is unstable, it will also affect sealing performance of a pole post. Therefore, it is particularly important to fix the position of the lower insulation plate.

### SUMMARY

The invention is set out in the appended set of claims. The following disclosure serves a better understanding of the present invention. In view of the above issues, the disclosure provides a cover plate assembly and a battery cell of a secondary battery, which may at least prevent a lower insulation plate from being twisted relative to a cover plate.

A technical solution of the disclosure is implemented as follows:

According to one aspect of the disclosure, a cover plate assembly of a secondary battery is provided. The cover plate assembly includes a cover plate provided with a pole post installation hole and having a first side and a second side disposed opposite to each other along a first direction, in which the first direction is a thickness direction of the cover plate; a lower insulation plate located on the first side of the cover plate and having a through hole corresponding to the pole post installation hole; and a pole post passing through the through hole and the pole post installation hole. In a second direction perpendicular to the first direction, one of the pole post and the lower insulation plate includes a protrusion portion, and the other of the pole post and the lower insulation plate includes a recess portion matched with the protrusion portion. The pole post further includes a main body portion. In the second direction, the protrusion portion is formed by protrusion from the main body portion, or the recess portion is formed by recession in the main body portion.

In some embodiments, a projection of the protrusion portion in the first direction toward the cover plate includes at least one ridge edge.

In some embodiments, a number of the protrusion portion is 1.

In some embodiments, a projection of the protrusion portion in the first direction toward the cover plate is an arc edge.

In some embodiments, a number of the protrusion portion is 2 to 4.

In some embodiments, a length of the protrusion portion in the second direction is 1/15 to 1/8 of a length of the pole post in the second direction.

In some embodiments, the length of the protrusion portion in the second direction ranges from 1.8 mm to 3.0 mm.

In some embodiments, the lower insulation plate protrudes on a side facing away from the cover plate to form an accommodation portion, and at least portions of the main body portion and the protrusion portion or the main body portion and the recess portion are located in the accommodation portion. In a plane perpendicular to the first direction, the accommodation portion has a shape matched with the main body portion and the protrusion portion or the main body portion and the recess portion.

In some embodiments, the cover plate assembly further includes an electrical adapter disposed on a side of the lower insulation plate facing away from the cover plate and electrically connecting the pole post and an electrode assembly. In the first direction, the accommodation portion of the lower insulation plate is at least partially embedded in the electrical adapter in a shape-matching manner.

In some embodiments, a shape of the main body portion is at least one of a triangle, a rhombus, and an ellipse.

In some embodiments, the cover plate assembly further includes an electrical adapter disposed on a side of the lower insulation plate facing away from the cover plate and electrically connecting the pole post and an electrode assembly. In the first direction, the pole post on a side facing away from the cover plate is embedded in the electrical adapter.

In some embodiments, a projection of a portion of the pole post embedded in the electrical adapter on the cover plate is circular.

In some embodiments, a portion of the pole post embedded in the electrical adapter overlaps projections of the main body portion and the protrusion portion of the pole post or the main body portion and the recess portion of the pole post.

In some embodiments, the pole post installation hole includes a first pole post installation hole and a second pole post installation hole. The through hole includes a first through hole corresponding to the first pole post installation hole and a second through hole corresponding to the second pole post installation hole. The pole post includes a first pole post and a second pole post with opposite polarities. The first pole post passes through the first through hole and the first pole post installation hole, and the second pole post passes through the second through hole and the second pole post installation hole. In the second direction perpendicular to the first direction, the first pole post includes a first protrusion portion, and the lower insulation plate includes a first recess portion matched with the first protrusion portion. The second pole post includes a second recess portion, and the lower insulation plate includes a second protrusion portion matched with the second recess portion.

In some embodiments, a length of the cover plate ranges from 100 mm to 350 mm.

According to another aspect of the disclosure, a battery cell is further provided, including a housing having an opening; an electrode assembly disposed in the housing; and the above cover plate assembly sealing the opening of the housing, in which the cover plate assembly includes the lower insulation plate, and the lower insulation plate is located on the first side of the cover plate close to the electrode assembly.

Beneficial technical effects of the disclosure include:

By configuring the main body portion of the pole post to have the recess portion or the protrusion portion in a direction perpendicular to the thickness direction of the cover plate, and the lower insulation plate to include the protrusion portion or the recess portion that is matched with the recess portion or the protrusion portion of the pole post, relative positions of the cover plate and the lower insulation plate are fixed to prevent the lower insulation plate from being twisted relative to the cover plate. Secondly, since the lower insulation plate is prevented from being twisted, the twisting of the pole post caused by the twisting of the lower insulation plate is avoided, and sealing stability between the pole post and the cover plate may be improved, thereby improving safety and airtight properties of an entire battery. Furthermore, since the position of the lower insulation plate is fixed, it is convenient to position an insulation film (such as Mylar (a polyester film)) used for insulating the housing and the electrode assembly and the lower insulation plate during an assembly process, and it is also convenient to fix an insulation member on the lower insulation plate. In addition, during a process of inserting the battery cell into the housing, the fixed position of the lower insulation plate relative to the cover plate may avoid interference between the lower insulation plate and the housing, thereby improving assembly efficiency, while also avoiding scratches between the insulation member fixed to the lower insulation plate and the housing, improving an insulation effect between the insulation member and the housing. In addition, during fabrication, transportation, a delivery process of a supply chain, a using process, etc., shaking of the relative position of the lower insulation plate may be avoided, which may easily cause particles inside the battery cell to be mixed in, thereby reducing a risk of corrosion of the battery cell caused by the particles and improving safety performance of the battery.

### BRIEF DESCRIPTION OF THE DRAWINGS

In order to more clearly describe the embodiments of the disclosure or the technical solutions in the related art, the drawings required for use in descriptions of the embodiments will be briefly introduced below. Obviously, the drawings in the following descriptions are merely some embodiments of the disclosure. For those skilled in the art, other drawings may be obtained based on the drawings without creative work.
FIG. 1 is an exploded view of an existing cover plate assembly.
FIG. 2A is an exploded view of a cover plate assembly according to an embodiment of the disclosure.
FIG. 2B is a bottom plan view of a cover plate assembly according to an embodiment of the disclosure.
FIG. 2C is a front view of a cover plate assembly and an electrode assembly according to an embodiment of the disclosure.
FIG. 3A is a bottom plan view of a pole post according to an embodiment of the disclosure.
FIG. 3B is a side isometric view of a pole post according to an embodiment of the disclosure.
FIG. 3C is a front view of a pole post according to an embodiment of the disclosure.
FIG. 4A is a bottom plan view of a lower insulation plate according to an embodiment of the disclosure.
FIG. 4B is a side isometric view of a lower insulation plate according to an embodiment of the disclosure.
FIG. 5A is a bottom plan view of a second insulation plate portion according to an embodiment of the disclosure.
FIG. 5B is a side isometric view of a second insulation plate portion according to an embodiment of the disclosure.
FIG. 6A is an exploded view of a cover plate assembly according to another embodiment of the disclosure.
FIG. 6B is a side isometric view of a cover plate assembly according to another embodiment of the disclosure.
FIG. 6C is a bottom plan view of a lower insulation layer and a pole post of a cover plate assembly according to another embodiment of the disclosure.
FIG. 6D is a side isometric view of a lower insulation layer and a pole post of a cover plate assembly according to an embodiment of the disclosure.
FIG. 7A is a side isometric view of pole posts with opposite polarities in a cover plate assembly according to another embodiment.
FIG. 7B is a bottom plan view of a first insulation plate portion and a second insulation plate portion of a cover plate assembly according to another embodiment.
FIG. 8A is a side isometric view of an electrical adapter of a cover plate assembly according to another embodiment of the disclosure.
FIG. 8B is a side isometric view of a pole post of a cover plate assembly according to another embodiment of the disclosure.
FIG. 9 is a side isometric view of pole posts of a cover plate assembly according to other embodiments of the disclosure.

### DETAILED DESCRIPTION OF DISCLOSED EMBODIMENTS

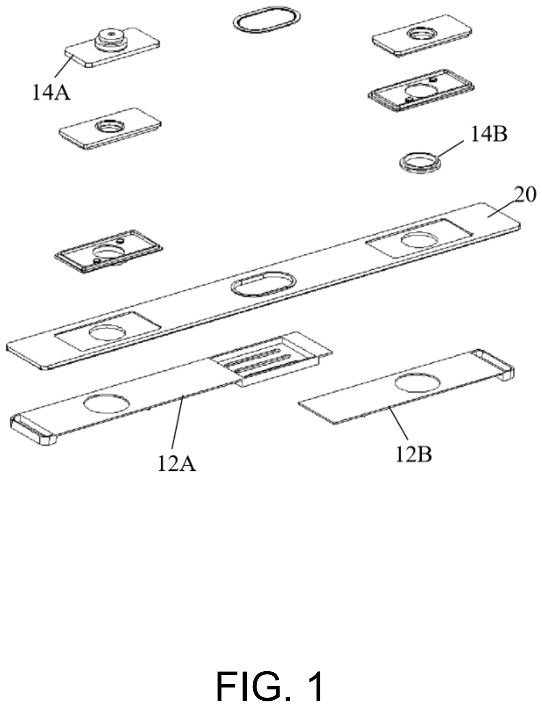

FIG. 1 is an exploded view of an existing cover plate assembly. As shown in FIG. 1, a lower insulation plate 12 of a general battery cell includes a first insulation plate portion 12A and a second insulation plate portion 12B that are separated. Opposite ends of the first insulation plate portion 12A and the second insulation plate portion 12B in a length direction (a direction X) of a cover plate are fixed to a lower side of a cover plate 20 through corresponding pole posts 14A and 14B and are hot-melted with Mylar. During an assembly process of the first insulation plate portion 12A and the second insulation plate portion 12B and the pole posts 14A and 14B, the first insulation plate portion 12A and the second insulation plate portion 12B tend to be twisted around the corresponding pole posts 14A and 14B, so that long sides of the first insulation plate portion 12A or the second insulation plate portion 12B may be twisted to a certain extent, resulting in interference while insertion of the battery cell into a housing, position of Mylar and lower plastic hot melt may vary, twisting the lower insulation plate 12 and assemble of the lower insulation plate 12 is unstable, and affecting a series of issues such as sealing performance of the pole post, especially when the battery cell is long, the above issues are more obvious.

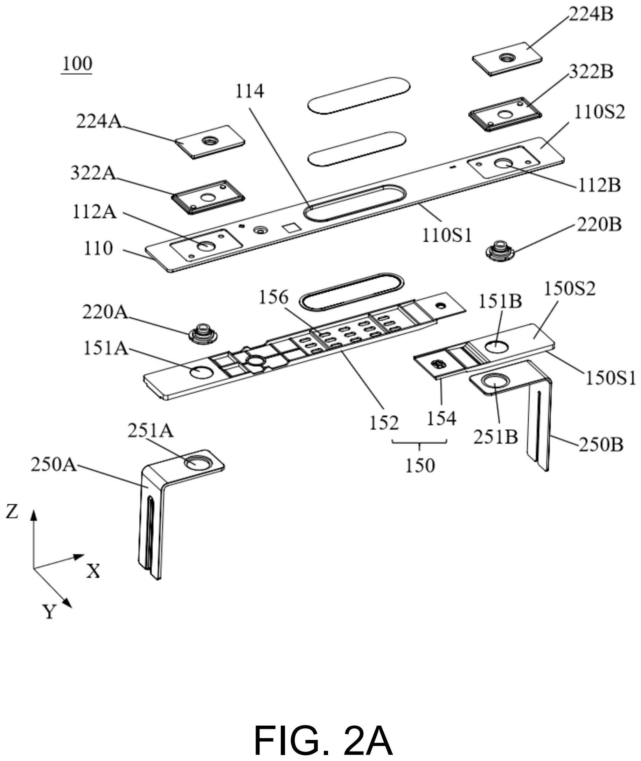

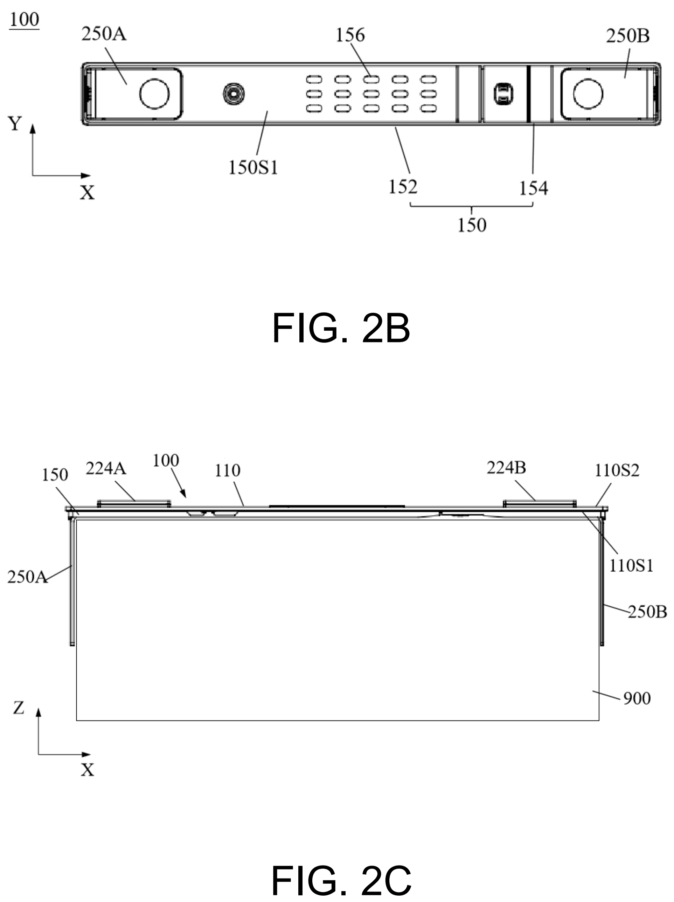

FIG. 2A is an exploded view of a cover plate assembly according to an embodiment of the disclosure. FIG. 2B is a bottom plan view of a cover plate assembly according to an embodiment of the disclosure. FIG. 2C is a front view of a cover plate assembly and an electrode assembly 900 according to an embodiment of the disclosure. Referring to FIGs. 2A to 2B, a cover plate assembly 100 may include a cover plate 110, and the cover plate 110 has a first side 110S1 and a second side 110S2 disposed opposite to each other along a direction Z (which may be referred to as a first direction). The direction Z is a thickness direction of the cover plate 110. The first side 110S1 is a side of the cover plate 110 facing the electrode assembly 900 (see FIG. 2C). The cover plate 110 is provided with a pole post installation hole 112A (which may be referred to as a first pole post installation hole) and a pole post installation hole 112B (which may be referred to as a second pole post installation hole). The pole post installation holes 112A and 112B extend from the first side 110S1 to the second side 110S2 of the cover plate 110.

The cover plate 110 extends longitudinally in the direction X. The pole post installation holes 112A and 112B may be disposed opposite to each other along the direction X. The cover plate 110 may further include an explosion-proof valve structure 114, and the explosion-proof valve structure 114 may be located between the pole post installation holes 112A and 112B. When thermal runaway occurs in the battery cell, the explosion-proof valve structure 114 may release pressure in a directional manner, and the heat and ejected materials may be discharged to an outside of the battery cell through the explosion-proof valve structure 114, reducing internal pressure of the battery cell and avoiding explosion caused by high pressure inside the battery cell.

The cover plate assembly 100 further includes a lower insulation plate 150. The lower insulation plate 150 is located on the first side 110S1 of the cover plate and has a through hole 151A (which may be referred to as a first through hole) and a through hole 151B (which may be referred to as a second through hole) corresponding to the pole post installation holes 112A and 112B. The lower insulation plate 150 extends longitudinally in the direction X, and the through holes 151A and 151B may be disposed opposite to each other in the direction X.

In this embodiment, the lower insulation plate 150 specifically includes a first insulation plate portion 152 and a second insulation plate portion 154 connected to the first insulation plate portion 152. A length of the first insulation plate portion 152 in the direction X may be greater than a length of the second insulation plate portion 154. The through holes 151A and 151B are respectively disposed in the first insulation plate portion 152 and the second insulation plate portion 154. The lower insulation plate 150 may further include multiple holes 156 corresponding to the explosion-proof valve structure 114 for providing an exhaust passage.

The cover plate assembly 100 further includes a pole post 220A (which may be referred to as a first pole post) and a pole post 220B (which may be referred to as a second pole post) with opposite polarities. In some embodiments, the pole post 220A is a positive pole post, and the pole post 220B is a negative pole post. Alternatively, the pole post 220A may be a negative pole post, and the pole post 220B may be a positive pole post.

The pole post 220A passes through the through hole 151A and the pole post installation hole 112A, and the second pole post 220B passes through the through hole 151B and the pole post installation hole 112B. In addition, upper insulation members 322A and 322B as well as electrode terminals 224A and 224B may be disposed above the cover plate 110. The pole posts 220A and 220B may further pass through the corresponding upper insulation members 322A and 322B and be connected to the corresponding electrode terminals 224A and 224B.

The lower insulation plate 150 includes a first side 150S1 and a second side 150S2 opposite to each other in the direction X. The first side 150S1 faces away from the cover plate 110 and faces the electrode assembly 900, and the second side 150S2 faces the cover plate 110. The cover plate assembly 100 may further include an electrical adapter 250A and an electrical adapter 250B, and the electrical adapter 250A and the electrical adapter 250B are disposed on the first side 150S1 of the lower insulation plate 150. The electrical adapter 250A electrically connects the pole post 220A and the electrode assembly 900, for example, connecting a corresponding tab (e.g., a positive tab) of the electrode assembly 900. The electrical adapter 250B electrically connects the pole post 220B and the electrode assembly 900, for example, connecting a corresponding tab (e.g., a negative tab) of the electrode assembly 900.

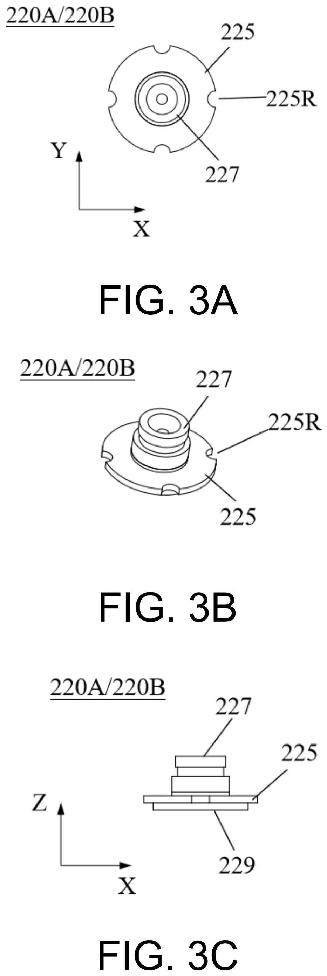

FIG. 3Ais a bottom plan view of a pole post according to an embodiment of the disclosure. FIG. 3B is a side isometric view of a pole post according to an embodiment of the disclosure. FIG. 3C is a front view of a pole post according to an embodiment of the disclosure. Referring to FIGs. 3A to 3C, the pole post 220A includes a main body portion 225 and a columnar portion 227 connected to the main body portion 225. The columnar portion passes through the through hole 151A and the pole post installation hole 112A. The main body portion 225 is located between the lower insulation plate 150 and the electrical adapter 250A.

In this embodiment, the main body portion 225 includes a recess portion 225R. The recess portion 225R is recessed from the main body portion 225 in a direction perpendicular to the direction Z. In some embodiments, a structure of the pole post 220B may be the same as that of the pole post 220A.

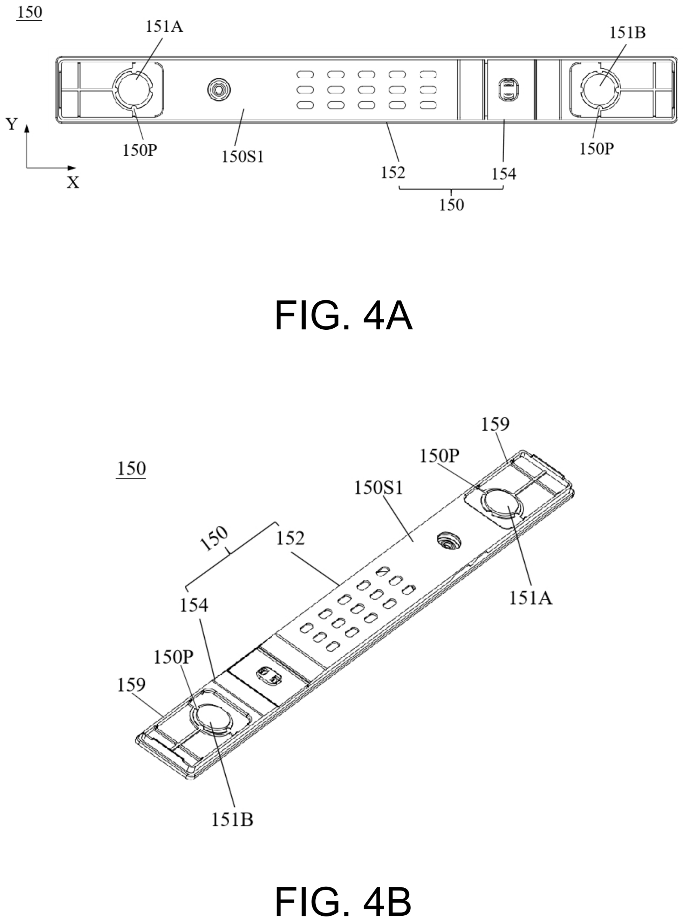

FIG. 4A is a bottom plan view of the lower insulation plate 150 according to an embodiment of the disclosure. FIG. 4B is a side isometric view of the lower insulation plate 150 according to an embodiment of the disclosure. In FIGs. 4A and 4B, the first side 150S1 of the lower insulation plate 150 facing the electrode assembly 900 is shown.

Referring to FIGs.4A and 4B, the lower insulation plate 150 includes a protrusion portion 150P. Each of the protrusion portions 150P protrudes in the direction perpendicular to the direction Z. The recess portion 225R of the pole post is matched with the corresponding protrusion portion 150P of the lower insulation plate 150.

By configuring the main body portion 225 of the pole posts 220A and 220B to have the recess portion 225R recessed in the direction perpendicular to the direction Z, and the lower insulation plate 150 to include the protrusion portion 150P that is matched with the recess portion 225R, relative positions of the cover plate 110 and the lower insulation plate 150 (e.g., relative positions in an XY plane) are fixed to prevent the lower insulation plate 150 from being twisted relative to the cover plate 110. Since the lower insulation plate 150 is prevented from being twisted, the twisting of the pole posts 220A and 220B caused by the twisting of the lower insulation plate 150 is avoided, and sealing stability between the pole posts 220A and 220B and the cover plate 110 may be improved, thereby improving safety and airtight properties of an entire battery. Furthermore, since the position of the lower insulation plate 150 is fixed, it is convenient to position an insulation film (such as Mylar) used for insulating the housing and the electrode assembly and the lower insulation plate 150 during the assembly process, and it is also convenient to fix the insulation member on the lower insulation plate 150. In addition, during a process of inserting the battery cell into the housing, the fixed position of the lower insulation plate 150 relative to the cover plate 110 may avoid interference between the lower insulation plate 150 and the housing, thereby improving assembly efficiency, while also avoiding scratches between the insulation member fixed to the lower insulation plate 150 and the housing, improving an insulation effect between the insulation member and the housing. In addition, during fabrication, transportation, a delivery process of a supply chain, and a using process, shaking of the relative position of the lower insulation plate 150 may be avoided, which may easily cause particles inside the battery cell to be mixed in, thereby reducing a risk of corrosion of the battery cell caused by the particles and improving safety performance of the battery.

In some embodiments, a length of the cover plate 110 in the direction X ranges from 100 mm to 350 mm. In this case, the battery cell is designed to be longer, resulting in a longer cover plate. Therefore, a multi-section lower plastic is required to be fixed to the cover plate 110 to achieve insulation between the cover plate 110 and the electrode assembly. In this case, it is more important to fix the position of the lower insulation plate. According to an embodiment of the disclosure, by configuring the pole posts 220A and 220B to have the recess portion 225R, and the lower insulation plate 150 to include the protrusion portion 150P that is matched with the recess portion 225R, the positions of the longer cover plate 110 and the lower insulation plate 150 are fixed, and the lower insulation plate 150 is prevented from being twisted relative to the longer cover plate 110, thereby effectively improving the safety and airtight properties of the battery, the assembly efficiency, the insulation effect of the insulation member, the safety of the battery, etc.

In some embodiments, referring to FIGs. 3A to 3C, corresponding to the protrusion portion 150P, a projection of the recess portion 225R of the main body portion 225 of the pole post 220B in the direction Z includes at least an arc edge. The arc-shaped recess portion 225R has an advantage of being easy for processing. The number of recess portions 225R may be 2 to 4 (FIGs. 3A and 3B show a case of 4 recess portions). If the number of arc-shaped recess portions is too small, it may not be sufficient to prevent the lower insulation plate from being twisted relative to the cover plate. If the number is too large, it will cause great difficulty in processing. By setting the number of recess portions 225R with the arc edge to 2 to 4, it may ensure that the lower insulation plate is prevented from being twisted relative to the cover plate while ensuring that the difficulty in processing is not great.

Specifically, the first insulation plate portion 152 and the second insulation plate portion 154 may respectively include the protrusion portion 150P. The protrusion portion 150P of the first insulation plate portion 152 is matched with the recess portion 225R of the pole post 220A, and the protrusion portion 150P of the second insulation plate portion 154 is matched with the recess portion 225R of the pole post 220B. The following mainly describes the embodiment of the disclosure by using the cooperation between the protrusion portion 150P of the second insulation plate portion 154 and the recess portion 225R of the pole post 220B.

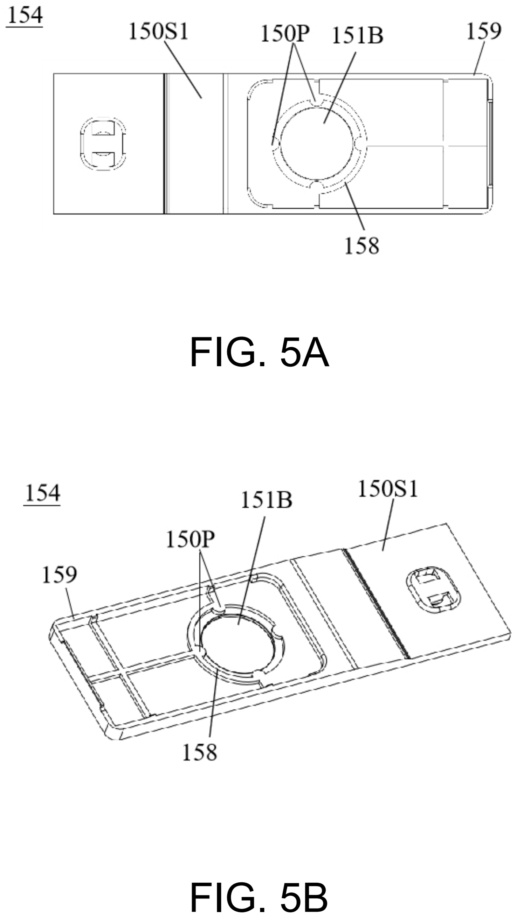

FIG. 5A is a bottom plan view of the second insulation plate portion 154 according to an embodiment of the disclosure. FIG. 5B is a side isometric view of the second insulation plate portion 154 according to an embodiment of the disclosure. Referring to FIGs. 5A and 5B, in this embodiment, a projection of the protrusion portion 150P in the direction Z is an arc edge. This arc-shaped protrusion portion 150P has the advantage of being easy for processing.

In some embodiments, the number of protrusion portions 150P of the second insulation plate portion 154 is 2 to 4. In the embodiment shown in FIGs. 5A and 5B, the number of protrusion portions 150P of the second insulation plate portion 154 is 4. If the number of arc-shaped protrusion portions 150P is too small, it may not be sufficient to prevent the lower insulation plate from being twisted relative to the cover plate. If the number is too large, it will cause great difficulty in processing. By setting the number of protrusion portions 150P with the arc edge to 2 to 4, it may ensure that the lower insulation plate is prevented from being twisted relative to the cover plate while reducing the difficulty in processing.

In other embodiments, the projection of the recess portion 225R of the pole posts 220A and 220B in the direction Z may include at least one ridge edge. Accordingly, the projection of the protrusion portion 150P of the lower insulation plate 150 in the direction Z may include at least one ridge edge. Compared to the arc-shaped protrusion portion and recess portion, the ridge-shaped protrusion portion and recess portion may provide a better anti-twist effect. In an embodiment, the numbers of ridge-shaped recess portions 225R and protrusion portions 150P may be one respectively. Since the ridge-shaped protrusion portion and recess portion have the better anti-twist effect, one protrusion portion and one recess portion that are matched with each other may be disposed respectively, which may further reduce the difficulty in processing.

In some embodiments, a length of the recess portion 225R of the pole posts 220A and 220B in the direction X is 1/15 to 1/8 of a length of the pole post 220A in the direction X. The length of the pole post 220A refers to a maximum length of the pole post 220A. In the embodiment where the pole post is circular, the length of the pole post 220A is a diameter. In some embodiments, the maximum length of the pole post 220A is a maximum length of the main body portion 225 thereof. If a ratio of the length is too small, the length of the recess portion 225R will be too small, which may not effectively prevent the lower insulation plate from being twisted relative to the cover plate. If the ratio of the length is too large, the length of the recess portion 225R will be too large, which will cause great difficulty in processing and high cost. The ratio of the length ranging from 1/15 to 1/8 may ensure that the lower insulation plate may be prevented from being twisted relative to the cover plate, while also being easy for processing and low in cost.

In some embodiments, the length of the recess portion 225R of the pole posts 220A and 220B in the direction X ranges from 1.8 mm to 3.0 mm. A value range of the length makes it easier to process the recess portion 225R, while also having the good anti-twist effect.

In some embodiments, the second insulation plate portion 154 protrudes on the first side 150S1 to form an accommodation portion 158. At least portions of the main body portion 225 and the recess portion 225R of the pole post 220B are located in the accommodation portion 158. The main body portion 225 and the recess portion 225R on a side facing the cover plate 110 are located in the accommodation portion 158. In the XY plane, the accommodation portion 158 has a shape matched with the main body portion 225 and the recess portion 225R. In this way, by disposing the accommodation portion 158 that is matched with the main body portion 225 and the recess portion 225R, the second insulation plate portion 154 is not only matched with the recess portion 225R but also further matched with a shape of the main body portion 225, which may further enhance the anti-twist effect.

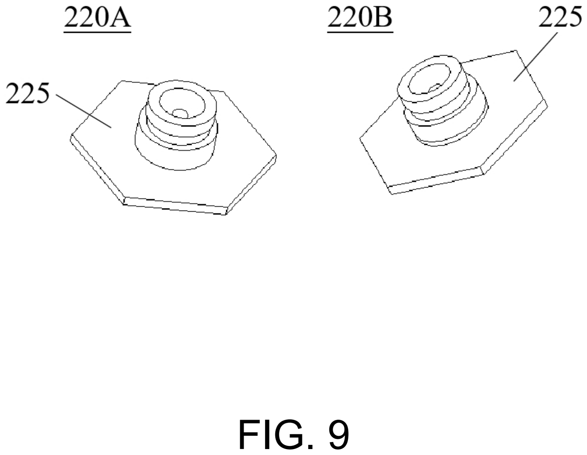

In some other embodiments, the main body portion 225 of the pole posts 220A and 220B may also have other applicable shapes. In some other embodiments, the shape of the main body portion 225 may be a polygon, such as a triangle or a hexagon (as shown in FIG. 9), or the shape of the main body portion 225 may be an ellipse. These shapes of the main body portion 225 also have the advantages of being easy for processing and having the good anti-twist effect.

Referring to FIGs. 3A to 3C in combination with FIGs. 5A and 5B, the pole posts 220A and 220B are embedded in the corresponding electrical adapters 250A and 250B in the direction Z to achieve electrical connection between the pole posts and the electrical adapter. In some embodiments, the pole posts 220A and 220B may further include a regular portion 229 connected to the main body portion 225 (see FIG. 3C), and the regular portion 229 is connected to a side of the main body portion 225 relative to the columnar portion 227. The regular portion 229 refers to an irregular projection shape on the cover plate 110 along the direction Z relative to the main body portion 225, and a projection of the regular portion 229 on the cover plate 110 along the direction Z has a regular graphic shape (e.g., a circle). In some embodiments, the regular portion 229 of the pole posts 220A and 220B is embedded in the corresponding electrical adapters 250A and 250B in the direction Z. Since the pole post and the electrical adapter at least partially overlap in the thickness direction (the direction Z), a space occupied by the pole post and the electrical adapter inside the battery cell may be reduced, thereby improving overall energy density of the battery cell. In some embodiments, the projection of the regular portion 229 on the cover plate 110 in the direction Z is circular. The circular regular portion 229 is easier for processing and is convenient for embedding the regular portion 229 in the electrical adapters 250A and 250B, which may improve the assembly efficiency.

Referring to FIG. 2A, the electrical adapter 250A and the electrical adapter 250B may respectively include a recess 251A and a recess 251B on a side facing the lower insulation plate 150. Shapes of the recess 251A and the recess 251B may be matched with a shape of the regular portion 229 of the pole posts 220A and 220B. In some embodiments, projections of the recess 251A and the recess 251B in the direction Z are circular. The regular portion 229 of the pole posts 220A and 220B may be located in the corresponding recesses 251A and 251B.

In addition, the first insulation plate portion 152 and the second insulation plate portion 154 of the lower insulation plate 150 respectively have a protrusion portion 159 in the direction Z. The protrusion portion 159 may extend along an edge of a surface of the first side 150S1 of the corresponding first insulation plate portion 152 and second insulation plate portion 154 to form a closed ring shape. The closed ring formed by the protrusion portion 159 may be matched with a shape of a surface (the surface where the recess 251A and the recess 251B are formed) of the corresponding electrical adapter 250A and electrical adapter 250B facing the lower insulation plate 150 and be embedded in the electrical adapter 250A and the electrical adapter 250B. In addition, the closed ring has openings in the middle, and the pole posts 220A and 220B pass through the corresponding openings to be embedded in the electrical adapter 250A and the electrical adapter 250B respectively. The protrusion portion 159 of the lower insulation plate 150 is embedded in the electrical adapter 250A and the electrical adapter 250B in a shape-matching manner, which may fix relative positions of the pole posts 220A and 220B, the lower insulation plate 150, and the electrical adapter 250A and the electrical adapter 250B, and prevent the lower insulation plate from being twisted relative to the electrical adapter, thereby further improving the safety and airtight properties of the battery, the assembly efficiency, the insulation effect of the insulation member, and the safety of the battery.

In other embodiments, the first insulation plate portion 152 and the second insulation plate portion 154 are not embedded in the electrical adapter 250A and the electrical adapter 250B, and the pole posts 220A and 220B directly pass through the openings to be embedded in the electrical adapter 250A and the electrical adapter 250B. Such a structure may reduce the difficulty in processing and save the cost of processing.

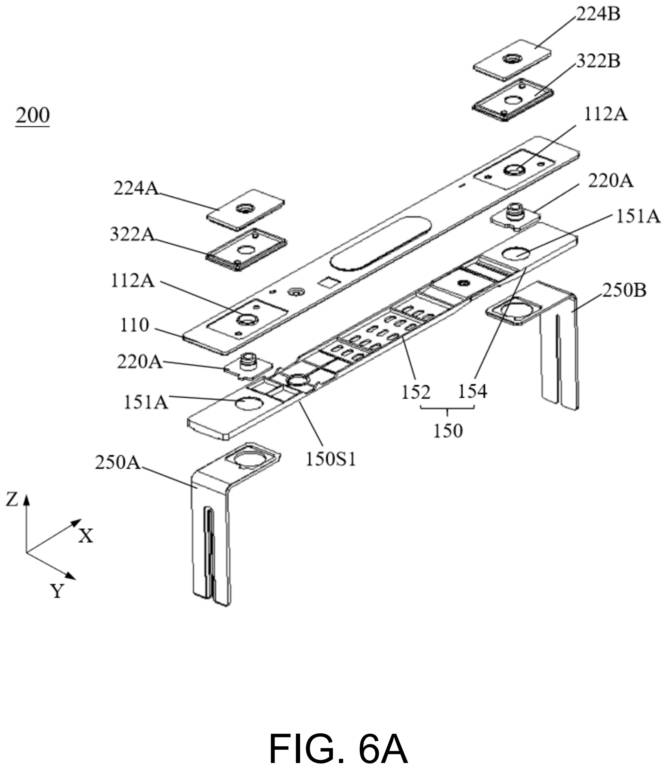

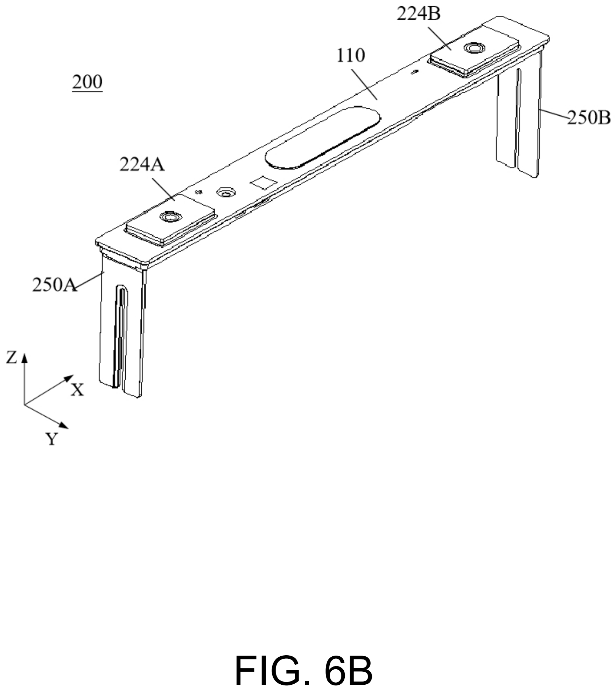

FIG. 6A is an exploded view of a cover plate assembly 200 according to another embodiment of the disclosure. FIG. 6B is a side isometric view of the cover plate assembly 200 according to another embodiment of the disclosure.

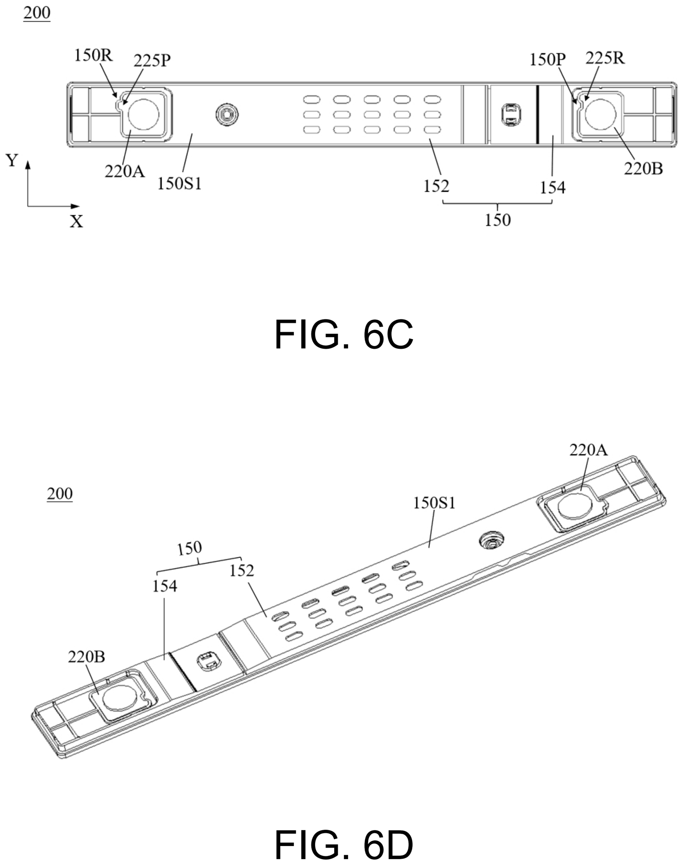

FIG. 6C is a bottom plan view of a lower insulation layer and a pole post of the cover plate assembly 200 according to another embodiment of the disclosure. FIG. 6D is a side isometric view of a lower insulation layer and a pole post of the cover plate assembly 200 according to an embodiment of the disclosure. Multiple aspects of the cover plate assembly 200 in the embodiment shown in FIGs. 6A to 6D may be the same as those of the cover plate assembly 100 described above with reference to FIGs. 2A to 5B, and differences of the cover plate assembly 200 will be mainly described below.

Referring to FIGs. 6A to 6D, the pole post 220A includes a protrusion portion 225P, and the corresponding first insulation plate portion 152 includes a matching recess portion 150R. The pole post 220B includes the recess portion 225R, and the corresponding second insulation plate portion 154 includes the matching protrusion portion 150P. The protrusion portion 225P and the protrusion portion 150P are respectively protrude in the direction (e.g., the direction X) perpendicular to the direction Z. The recess portion 150R and the recess portion 225R are respectively recessed in the direction (e.g., the direction X) perpendicular to the direction Z.

By configuring the pole posts 220A and 220B and the corresponding first insulation plate portion 152 and second insulation plate portion 154 to have the matching protrusion portion and recess portion in the direction perpendicular to the direction Z, the relative positions of the cover plate 110 and the lower insulation plate 150 (e.g., the relative positions in the XY plane) are fixed to prevent the lower insulation plate 150 from being twisted relative to the cover plate 110. The twisting of the pole posts 220A and 220B caused by the twisting of the lower insulation plate 150 is avoided, and the sealing stability between the pole posts 220A and 220B and the cover plate 110 may be improved, thereby improving the safety and airtight properties of the entire battery. Furthermore, since the position of the lower insulation plate 150 is fixed, it is convenient to position the insulation film (such as Mylar) used for insulating the housing and the electrode assembly and the lower insulation plate 150 during the assembly process, and it is also convenient to fix the insulation member on the lower insulation plate 150. In addition, during the process of inserting the battery cell into the housing, the fixed position of the lower insulation plate 150 relative to the cover plate 110 may avoid the interference between the lower insulation plate 150 and the housing, thereby improving the assembly efficiency, while also avoiding the scratches between the insulation member fixed to the lower insulation plate 150 and the housing, improving the insulation effect between the insulation member and the housing. In addition, during the fabrication, the transportation, the delivery process of the supply chain, and the using process, the shaking of the relative position of the lower insulation plate 150 may be avoided, which may easily cause the particles inside the battery cell to be mixed in, thereby reducing the risk of corrosion of the battery cell caused by the particles and improving the safety performance of the battery.

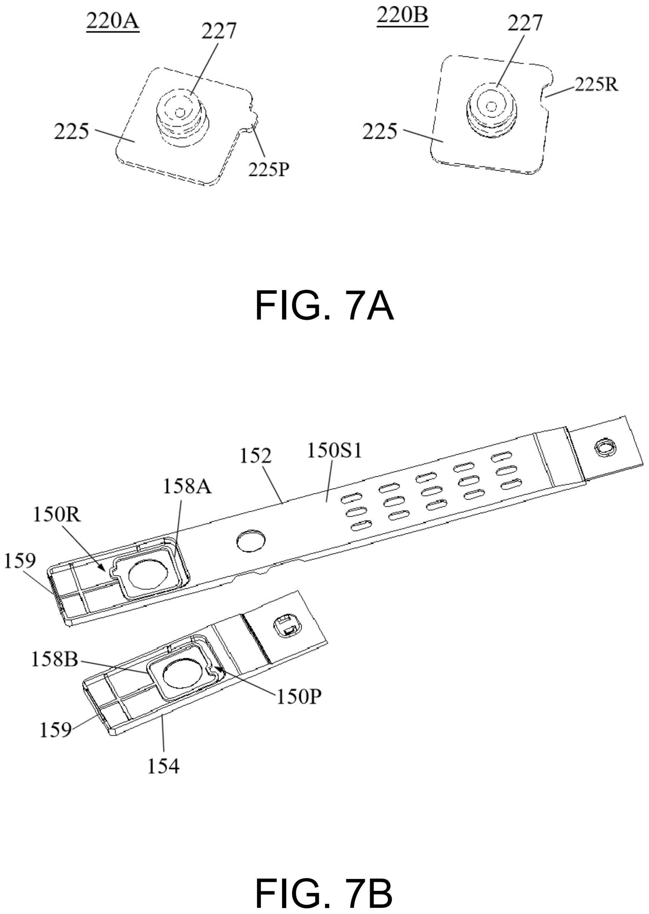

More specifically, FIG. 7A is a side isometric view of pole posts with opposite polarities in a cover plate assembly according to another embodiment. FIG. 7B is a bottom plan view of a first insulation plate portion and a second insulation plate portion of a cover plate assembly according to another embodiment.

As shown in FIG. 7A, the pole posts 220A and 220B respectively include the main body portion 225 and the columnar portion 227 connected to the main body portion 225. The shape of the main body portion 225 is a rhombus having rounded corners, specifically a square.

Regarding the pole post 220A, the main body portion 225 of the pole post 220A includes the protrusion portion 225P. In this embodiment, the protrusion portion 225P protrudes from the main body portion 225 in the direction X. The shape of the main body portion 225 is the rhombus having the rounded corners (which may specifically be the square). A projection of the protrusion portion 225P in the direction Z may include at least one ridge edge. In this embodiment, the projection of the protrusion portion 225P in the direction Z includes three ridge edges, and the three ridge edges are sequentially connected through the rounded corners. A ridge-shaped structure of the protrusion portion 225P including the ridge edges may have the better anti-twist effect, and the difficulty in processing is not high.

In this embodiment, the number of protrusion portions 225P of the main body portion 225 and the number of corresponding recess portions 150R are both one. Both the numbers of protrusion portions 225P and recess portions 150R are configured to be one, which has the advantages of easy processing and low cost. In this embodiment, the number of recess portions 225R of the pole post 220B and the number of corresponding protrusion portions 150P are both one. Since the ridge-shaped protrusion portion 225P has the better anti-twist effect, only one protrusion portion is disposed, which may further reduce the difficulty in processing.

In some embodiments, a length of the protrusion portion 225P in the direction X is 1/15 to 1/8 of the length of the pole post 220A in the direction X. The length of the pole post 220A refers to the maximum length of the pole post 220A. In the embodiment where the pole post is circular, the length of the pole post 220A is the diameter. In some embodiments, the maximum length of the pole post 220A is the maximum length of the main body portion 225 thereof. If a ratio of the length is too small, the length of the protrusion portion 225P will be too small, which may not effectively prevent the lower insulation plate from being twisted relative to the cover plate. If the ratio of the length is too large, the length of the protrusion portion 225P will be too large, which will cause great difficulty in processing and high cost. The ratio of the length ranging from 1/15 to 1/8 may ensure that the lower insulation plate may be prevented from being twisted relative to the cover plate, while also being easy for processing and low in cost.

In some embodiments, the length of the cover plate 110 in the direction X ranges from 100 mm to 350 mm. As described above, when the battery cell is designed to be longer, resulting in the longer cover plate, according to the embodiment of the disclosure, the positions of the longer cover plate 110 and the lower insulation plate 150 are fixed, which may prevent the lower insulation plate 150 from being twisted relative to the longer cover plate 110, thereby effectively improving the safety and airtight properties of the battery, the assembly efficiency, the insulation effect of the insulation member, the safety of the battery, etc.

In some embodiments, the length of the protrusion portion 225P in the direction X ranges from 1.8 mm to 3.0 mm. A value range of the length makes it easier to process the protrusion portion 225P, and has the good anti-twist effect.

Regarding the pole post 220B, the main body portion 225 of the pole post 220B includes the recess portion 225R. In this embodiment, the recess portion 225R is recessed from the main body portion 225 in the direction X. The projection of the recess portion 225R in the direction Z may include the at least one ridge edge. In this embodiment, the recess portion 225R includes three ridge edges, and the three ridge edges are sequentially connected through the rounded corners. A ridge-shaped structure of the recess portion 225R has the advantages of low difficulty in processing, low cost, and good anti-twist effect.

In some other embodiments, the main body portion 225 of the pole posts 220A and 220B may also have other applicable shapes. For example, the shape of the main body portion 225 may be the polygon, such as the triangle or the hexagon (as shown in FIG. 9), or the main body portion 225 may be the ellipse. These shapes of the main body portion 225 also have the advantages of being easy for processing and having the good anti-twist effect.

Combined with FIG. 7B, the first insulation plate portion 152 protrudes on the first side 150S1 to form an accommodation portion 158A. The accommodation portion 158A has the recess portion 150R. At least portions of the main body portion 225 and the protrusion portion 225P of the pole post 220A are located in the accommodation portion 158A. The main body portion 225 and the protrusion portion 225P of the pole post 220A are located in the accommodation portion 158A on the side facing the cover plate 110. In the XY plane, the accommodation portion 158A has a shape matched with the main body portion 225 and the protrusion portion 225P. By disposing the accommodation portion that is matched with the main body portion 225 and the protrusion portion 225P, the first insulation plate portion 152 is not only matched with the protrusion portion 225P but also further matched with the shape of the main body portion 225, which may further enhance the anti-twist effect.

Similarly, the second insulation plate portion 154 protrudes on the first side 150S1 to form an accommodation portion 158B. The accommodation portion 158B has the protrusion portion 150P. At least portions (e.g., the side facing the cover plate 110) of the main body portion 225 and the recess portion 225R of the pole post 220B are located in the accommodation portion 158B. In the XY plane, the accommodation portion 158B has a shape matched with the main body portion 225 and the recess portion 225R, and a shape of the second insulation plate portion 154 is matched with those of the main body portion 225 and the recess portion 225R, which may further enhance the anti-twist effect.

In some embodiments, the first insulation plate portion 152 and the second insulation plate portion 154 respectively have the protrusion portion 159 in the direction Z. The protrusion portion 159 may extend along the edge of the surface of the first side 150S1 of the corresponding first insulation plate portion 152 and second insulation plate portion 154 to form the closed ring. The closed ring formed by the protrusion portion 159 may be matched with the shape of the surface (the surface where the recess 251A and the recess 251B are formed) of the corresponding electrical adapter 250A and electrical adapter 250B facing the lower insulation plate 150 and be embedded in the electrical adapter 250A and the electrical adapter 250B. In addition, the closed ring has openings in the middle, and the pole posts 220A and 220B pass through the corresponding openings to be embedded in the electrical adapter 250A and the electrical adapter 250B respectively. The protrusion portion 159 of the lower insulation plate 150 is embedded in the electrical adapter 250A and the electrical adapter 250B in the shape-matching manner, which may fix the relative positions of the pole posts 220A and 220B, the lower insulation plate 150, and the electrical adapter 250A and the electrical adapter 250B, and prevent the lower insulation plate from being twisted relative to the electrical adapter, thereby further improving the safety and airtight properties of the battery, the assembly efficiency, the insulation effect of the insulation member, and the safety of the battery.

In other embodiments, the first insulation plate portion 152 and the second insulation plate portion 154 are not embedded in the electrical adapter 250A and the electrical adapter 250B, and the pole posts 220A and 220B directly pass through the openings to be embedded in the electrical adapter 250A and the electrical adapter 250B. Such a structure may reduce the difficulty in processing and save the cost of processing.

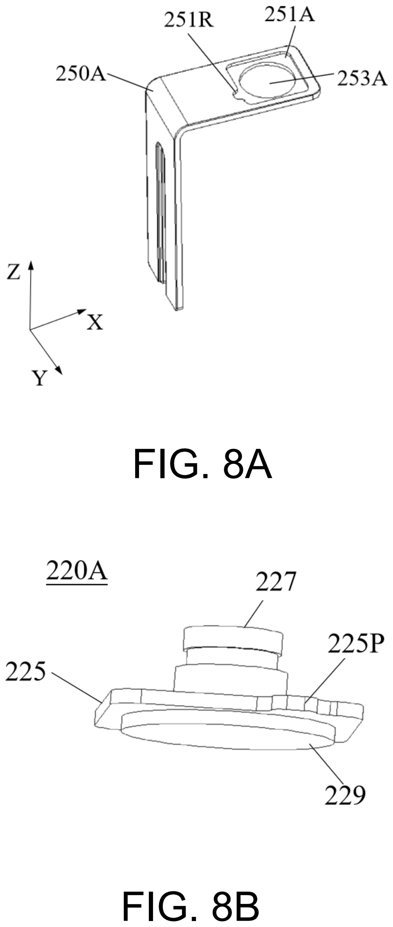

FIG. 8A is a side isometric view of the electrical adapter 250A of the cover plate assembly 200 according to another embodiment of the disclosure. FIG. 8B is a side isometric view of the pole post 220A of the cover plate assembly 200 according to another embodiment of the disclosure. In FIGs. 8A and 8B, the electrical adapter 250A and the pole post 220A are respectively taken as examples. Combined with FIGs. 8A and 8B, in some embodiments, in the direction Z, the pole post 220A on a side facing away from the cover plate is embedded in the electrical adapter 250A. Specifically, the regular portion 229 of the pole post 220A may be embedded in the electrical adapter 250A, and the main body portion 225and the protrusion portion 225P of the pole post 220A on a side connected to the regular portion 229 may be embedded in the electrical adapter 250A. Since the main body portion 225 and the regular portion 229 of the pole post 220A at least partially overlap the electrical adapter 250A in the thickness direction (the direction Z), the space occupied by the pole post and the electrical adapter inside the battery cell may be further reduced, thereby improving the overall energy density of the battery cell. In some embodiments, the projection of the regular portion 229 on the cover plate 110 in the direction Z is circular. The circular regular portion 229 is easier for processing and is convenient for embedding the regular portion 229 in the electrical adapter 250, which may improve the assembly efficiency.

In some embodiments, a portion of the pole post 220A embedded in the electrical adapter 250A overlaps the projections of the main body portion 225 and the protrusion portion 225P of the pole 220A in the direction Z. Specifically, the electrical adapter 250A may include the recess 251A on the side facing the lower insulation plate 150. A side wall of the recess 251A may have a recess portion 251R to be matched with the shapes of the main body portion 225 and the protrusion portion 225P of the pole post 220A, so that the at least portions of the main body portion 225 and the protrusion portion 225P are embedded in the recess 251A in the direction Z. The protrusion portion 225P is embedded in the electrical adapter 250A, so that the protrusion portion 225P and the electrical adapter 250A are matched with each other, which may further have the anti-twist effect and ensure that the relative positions of the pole post 220A, the first insulation plate portion 152, and the electrical adapter 250A remain fixed. In addition, it may further ensure that the electrical adapter 250A is disposed at a predetermined position, ensure that an angle between the two electrical adapters 250A and 250B are parallel to each other, and ensure excellence of a design.

Specifically, the electrical adapter 250A may further include a through hole 253A located below the recess 251A. A shape of the through hole 253A may be matched with the shape of the regular portion 229, so that the regular portion 229 of the pole post 220A may be embedded in the through hole 253A.

As shown in FIG. 8A, in the direction Z, the accommodation portion 158A of the first insulation plate portion 152 is at least partially embedded in the electrical adapter 250A in the shape-matching manner, for example, embedded in the recess 251A, so as to ensure that the relative positions of the pole post 220A, the first insulation plate portion 152, and the electrical adapter 250A remain fixed.

Configurations of the electrical adapter 250A, the pole post 220A, and the first insulation plate portion 152 is described above with reference to FIGs. 8A and 8B. It should be understood that the electrical adapter 250B, the pole post 220B, the second insulation plate portion 154 may have similar configurations.

The embodiment of the disclosure further provides a battery cell, which may include: a housing having an opening, an electrode assembly (such as the electrode assembly 900) disposed in the housing, and a cover plate assembly (such as the cover plate assembly 100 or 200) sealing the opening of the housing.

## Claims

1. A cover plate assembly (100, 200) of a secondary battery, **characterized in that**, comprising:
a cover plate (110) provided with a pole post installation hole (112A, 112B) and having a first side (110S1) and a second side (110S2) disposed opposite to each other along a first direction (Z), wherein the first direction (Z) is a thickness direction of the cover plate (110);
a lower insulation plate (150) located on the first side (110S1) of the cover plate (110) and having a through hole (151A, 151B) corresponding to the pole post installation hole (112A, 112B); and
a pole post (220A, 220B) passing through the through hole (151A, 151B) and the pole post installation hole (112A, 112B);
wherein in a second direction perpendicular to the first direction (Z), one of the pole post (220A, 220B) and the lower insulation plate (150) comprises a protrusion portion (150P, 225P), the other of the pole post (220A, 220B) and the lower insulation plate (150) comprises a recess portion (150R, 225R) matched with the protrusion portion (150P, 225P), the pole post (220A, 220B) further comprises a main body portion (225), and in the second direction, the protrusion portion (150P, 225P) is formed by protrusion from the main body portion (225), or the recess portion (150R, 225R) is formed by recession in the main body portion (225).

2. The cover plate assembly (100, 200) of the secondary battery according to claim 1, wherein
a projection of the protrusion portion (150P, 225P) in the first direction (Z) toward the cover plate (110) comprises at least one ridge edge.

3. The cover plate assembly (100, 200) of the secondary battery according to claim 2, wherein
a number of the protrusion portion (150P, 225P) is 1.

4. The cover plate assembly (100, 200) of the secondary battery according to claim 1, wherein a projection of the protrusion portion (150P, 225P) in the first direction (Z) toward the cover plate (110) is an arc edge.

5. The cover plate assembly (100, 200) of the secondary battery according to claim 4, wherein
a number of the protrusion portion (150P, 225P) is 2 to 4.

6. The cover plate assembly (100, 200) of the secondary battery according to claim 1, wherein
a length of the protrusion portion (150P, 225P) in the second direction is 1/15 to 1/8 of a length of the pole post (220A, 220B) in the second direction.

7. The cover plate assembly (100, 200) of the secondary battery according to claim 6, wherein
the length of the protrusion portion (150P, 225P) in the second direction ranges from 1.8 mm to 3.0 mm.

8. The cover plate assembly (100, 200) of the secondary battery according to claim 1, wherein
the lower insulation plate (150) protrudes on a side facing away from the cover plate (110) to form an accommodation portion (158, 158A, 158B), and at least portions of the main body portion (225) and the protrusion portion (150P, 225P) or the main body portion (225) and the recess portion (150R, 225R) are located in the accommodation portion (158, 158A, 158B),
wherein in a plane perpendicular to the first direction (Z), the accommodation portion (158, 158A, 158B) has a shape matched with the main body portion (225) and the protrusion portion (150P, 225P) or the main body portion (225) and the recess portion (150R, 225R).

9. The cover plate assembly (100, 200) of the secondary battery according to claim 8, further comprising:
an electrical adapter (250A, 250B) disposed on a side of the lower insulation plate (150) facing away from the cover plate (110) and electrically connecting the pole post (220A, 220B) and an electrode assembly (900),
wherein in the first direction (Z), the accommodation portion (158, 158A, 158B) of the lower insulation plate (150) is at least partially embedded in the electrical adapter (250A, 250B) in a shape-matching manner.

10. The cover plate assembly (100, 200) of the secondary battery according to claim 8, wherein
a shape of the main body portion (225) is at least one of a triangle, a rhombus, and an ellipse.

11. The cover plate assembly (100, 200) of the secondary battery according to claim 1, further comprising:
an electrical adapter (250A, 250B) disposed on a side of the lower insulation plate (150) facing away from the cover plate (110) and electrically connecting the pole post (220A, 220B) and an electrode assembly (900),
wherein in the first direction (Z), a side facing away from the cover plate (110) of the pole post (220A, 220B) is embedded in the electrical adapter (250A, 250B).

12. The cover plate assembly (100, 200) of the secondary battery according to claim 11, wherein
a projection of a portion of the pole post (220A, 220B) embedded in the electrical adapter (250A, 250B) on the cover plate (110) is circular; and/or
a portion of the pole post (220A, 220B) embedded in the electrical adapter (250A, 250B) overlaps a projection of the main body portion (225) and the protrusion portion (150P, 225P) of the pole post (220A, 220B) or a projection of the main body portion (225) and the recess portion (150R, 225R) of the pole post (220A, 220B).

13. The cover plate assembly (200) of the secondary battery according to any one of claims 1 to 12, wherein
the pole post installation hole (112A, 112B) comprises a first pole post installation hole (112A) and a second pole post installation hole (112B);
the through hole (151A, 151B) comprises a first through hole (151A) corresponding to the first pole post installation hole (112A) and a second through hole (151B) corresponding to the second pole post installation hole (112B);
the pole post (220A, 220B) comprises a first pole post (220A) and a second pole post (220B) with opposite polarities, the first pole post (220A) passes through the first through hole (151A) and the first pole post installation hole (112A), and the second pole post (220B) passes through the second through hole (151B) and the second pole post installation hole (112B);
wherein in the second direction perpendicular to the first direction (Z), the first pole post (220A) comprises a first protrusion portion (225P), and the lower insulation plate (150) comprises a first recess portion (150R) matched with the first protrusion portion (225P); the second pole post (220B) comprises a second recess portion (225R), and the lower insulation plate (150) comprises a second protrusion portion (150P) matched with the second recess portion (225R).

14. The cover plate assembly (100, 200) of the secondary battery according to any one of claims 1 to 12, wherein a length of the cover plate (110) ranges from 100 mm to 350 mm.

15. A battery cell, **characterized in that**, comprising:
a housing having an opening;
an electrode assembly (900) disposed in the housing; and
the cover plate assembly (100, 200) according to any one of claims 1 to 14, sealing the opening of the housing, wherein the cover plate assembly (100, 200) comprises the lower insulation plate (150), and the lower insulation plate (150) is located on the first side (110S1) of the cover plate (110) close to the electrode assembly (900).
